# EUROPÄISCHE PATENTSCHRIFT

(11) **EP 3 889 105 B1**
(45) Veröffentlichungstag und Bekanntmachung des Hinweises auf die Patenterteilung: **14.12.2022**
(21) Anmeldenummer: 20020151.5
(22) Anmeldetag: 02.04.2020
(51) Int. Cl.: C01B 3/38, B01J 19/00

(54) **VERFAHREN UND ANLAGE ZUM HERSTELLEN EINES WASSERSTOFF UND KOHLENOXIDE ENTHALTENDEN SYNTHESEGASPRODUKTS**
METHOD AND SYSTEM FOR PRODUCING A SYNTHESIS GAS PRODUCT CONTAINING HYDROGEN AND CARBON OXIDES
PROCÉDÉ ET INSTALLATION DE FABRICATION D'UN PRODUIT GAZEUX DE SYNTHÈSE CONTENANT L'HYDROGÈNE ET L'OXYDE DE CARBONE

(43) Veröffentlichungstag der Anmeldung: 06.10.2021
(73) Patentinhaber: L'AIR LIQUIDE, SOCIÉTÉ ANONYME POUR L'ÉTUDE ET L'EXPLOITATION DES PROCÉDÉS GEORGES CLAUDE, 75007 Paris (FR)
(72) Erfinder: ULBER, Dieter, 60439 Frankfurt (DE); STANKE, Marion, 60388 Frankfurt (DE); SCHMIDT, Robin, 60388 Frankfurt (DE); PFEIFER, Christian, 60388 Frankfurt (DE)
(74) Vertreter: Dropsch, Holger

(56) Entgegenhaltungen:
- EP-A1- 3 018 095
- WO-A1-2011/072815
- US-A1- 2009 094 894
- US-A1- 2018 215 618

## Beschreibung

### Gebiet der Erfindung

Die Erfindung betrifft ein Verfahren und eine Anlage zum Herstellen eines Wasserstoff und Kohlenoxide enthaltenden Synthesegasprodukts aus einem Kohlenwasserstoffe enthaltenden Einsatzgas, vorzugsweise Erdgas oder Naphtha.

### Stand der Technik

Kohlenwasserstoffe können mit Dampf katalytisch zu Synthesegas, also Mischungen von Wasserstoff (H₂) und Kohlenmonoxid (CO), umgesetzt werden. Wie in Ullmann's Encyclopedia of Industrial Chemistry, Sixth Edition, 1998 Electronic Release und 6. Auflage 2003, Stichwort "Gas Production", ausgeführt wird, ist diese sogenannte Dampfreformierung (Steamreforming) die meist angewandte Methode für die Produktion von Synthesegas, welches nachfolgend zu weiteren bedeutenden Grundchemikalien wie Methanol oder Ammoniak umgesetzt werden kann. Zwar können unterschiedliche Kohlenwasserstoffe, wie beispielweise Naphtha, Flüssiggas oder Raffineriegase umgesetzt werden, jedoch ist die Dampfreformierung von methanhaltigem Erdgas (Steam Methane Reforming, SMR) dominierend. Diese verläuft stark endotherm. Sie wird daher in einem Reformerofen durchgeführt, in dem zahlreiche, Katalysator enthaltende Reformerrohre parallel angeordnet sind, in denen die Dampfreformierungsreaktion abläuft. Die Außenwände des Reformerofens sowie seine Decke und sein Boden sind dabei mit mehreren Schichten aus feuerfestem Material ausgekleidet oder zugestellt, das Temperaturen bis zu 1200 °C standhält. Die Reformerrohre werden zumeist mittels Brennern befeuert, die an der Oberseite oder Unterseite oder an den Seitenwänden des Reformerofens angebracht sind und direkt den Zwischenraum zwischen den Reformerrohren befeuern. Als Brennstoff dient ein Teil des Einsatzgases und/oder bei der Produktaufarbeitung erhaltene, brennbare Komponenten enthaltende Nebenproduktströme. Dabei erfolgt der Wärmeübergang auf die Reformerrohre durch Wärmestrahlung und konvektive Wärmeübertragung von den heißen Rauchgasen, die bei der Verbrennung in den Brennern erhalten werden.

Nach Vorerhitzung durch Wärmetauscher oder befeuerte Heizer auf ca. 500 °C tritt das Kohlenwasserstoff-Dampf-Gemisch nach Enderhitzung auf ca. 500 bis 800 °C in die Reformerrohre ein und wird dort am Reformierungskatalysator zu Kohlenmonoxid und Wasserstoff umgesetzt. Verbreitet sind Reformierungskatalysatoren auf Nickelbasis, die beispielsweise als Schüttung von Formkörpern in die Reformerrohre eingebracht werden. Während höhere Kohlenwasserstoffe vollständig zu Kohlenmonoxid und Wasserstoff umgesetzt werden, erfolgt im Falle des Methans üblicherweise ein Teilumsatz. Die Zusammensetzung des Produktgases wird dabei vom Reaktionsgleichgewicht bestimmt; das Produktgas enthält daher neben Kohlenmonoxid und Wasserstoff auch noch Kohlendioxid, nicht umgesetztes Methan sowie Wasserdampf.

Zur Energieoptimierung und/oder bei Einsatzstoffen mit höheren Kohlenwasserstoffen kann dem oben beschriebenen Reformierungsverfahren, das im Folgenden synonym auch als Hauptreformierung bezeichnet wird, ein sogenannter Vorreformer (Prereformer) zur Vorspaltung des Einsatzstoffes vorgeschaltet werden. Unter der Vorreformierung (Prereforming) wird zumeist die Anwendung eines Tieftemperatur-Reformierungsschrittes verstanden, der stromaufwärts eines konventionellen, mit Erdgas betriebenen Hauptreformers, beispielsweise eines Steamreformers, angeordnet ist. Im Gegensatz zur Dampfreformierungsreaktion wird bei der Vorreformierung das Reaktionsgleichgewicht bei weitaus geringeren Temperaturen eingestellt. Das hauptsächliche Merkmal der Vorreformierung ist die irreversible, vollständige Umsetzung der höheren Kohlenwasserstoffe im Einsatzgemisch zu Methan sowie teilweise zu Synthesegasbestandteilen. Häufig wird als Reaktortyp für die Vorreformierung ein einfacher, mit speziellem Vorreformierungskatalysator gefüllter, adiabat betriebener Schachtreaktor verwendet, der sich somit auch hinsichtlich seiner Konstruktion deutlich von dem allotherm betriebenen und eine Vielzahl von Reformerrohren aufweisenden Hauptreformer unterscheidet.

Aufgrund der im Vergleich zu der Hauptreformierung beträchtlich geringeren Temperatur bei der Vorreformierung, beispielsweise 530 °C, ist das Hauptprodukt der Vorreformierung neben nicht umgesetztem Dampf das Methan. Die übrigen Gaskomponenten sind Wasserstoff, Kohlendioxid, Spuren von Kohlenmonoxid und Inertkomponenten, die bereits im Einsatzstoff vorhanden waren. Da praktisch alle höheren Kohlenwasserstoffe, die im als Einsatz verwendeten Erdgas vorhanden sind, zu Methan und Synthesegasbestandteilen umgesetzt werden, wird das Risiko der Bildung von Koksablagerungen im Hauptreformer, das bezüglich des Betriebs des Hauptreformers einen besonders kritischen Punkt darstellt, erheblich verringert. Dies gestattet das Herabsetzen des Dampf/Kohlenstoff-Verhältnisses (S/C) und das Heraufsetzen der Wärmebelastung der Reformerröhren, was zu einem insgesamt geringeren Energieverbrauch und zur Verkleinerung der verwendeten Apparate führt. Darüber hinaus wird im Vorreformer bereits ein Anteil von Wasserstoff durch Umsetzung von Erdgas erzeugt sowie im Einsatzgemisch verbliebene Spuren von Katalysatorgiften auf dem Vorreformierungskatalysator adsorbiert- oder absorbiert. Dies führt dazu, dass der im Hauptreformer befindliche Reformierungskatalysator insbesondere an dessen Eingang unter optimalen Bedingungen arbeitet.

Der Vorreformierungsstufe ist zumeist noch eine Entschwefelungsstufe vorgeschaltet, um Schwefelanteile des Einsatzstoffes zu entfernen, die als Katalysatorgift für die in den nachgeschalteten Reformern enthaltenen Katalysatoren wirken. Die Entschwefelung kann dabei rein adsorptiv, beispielsweise an Adsorbentien auf Basis von Zinkoxid erfolgen. Für einige Anwendungen wird die hydrierende Entschwefelung (Hydrodesulfurierung) bevorzugt, bei der der in organischen und anorganischen Schwefelkomponenten gebundene Schwefel in Gegenwart geeigneter Katalysatoren mittels Wasserstoff in Form von Schwefelwasserstoff freigesetzt und nachfolgend an Adsorbentien der oben beschriebenen Art gebunden wird. Die genannten Entschwefelungsmethoden werden daher oft in Kombination eingesetzt.

Das ggf. entschwefelte und vorreformierte, Kohlenwasserstoffe enthaltende Einsatzgas wird vor seinem Einleiten in die mit Reformierungskatalysator gefüllten Reformerrohre, die im Reformerofen des Hauptreformers angeordnet sind und mit Brennern beheizt werden, auf die Dampfreformierungseintrittstemperatur gebracht. Hierzu wird ein Einsatzgas-Überhitzer verwendet, der als mehrstufiger Wärmetauscher ausgestaltet ist, wobei sich die Wärmetauscherstufen beispielsweise als Rohrwicklungen, sogenannte Coils, in der Abhitzestrecke für das Brennerrauchgas des Reformerofens befinden. Auch das richtige Betreiben des Einsatzgas-Überhitzers ist bedeutend zur Vermeidung oder Verminderung der Koksbildung in den Reformerrohren.

In der europäischen Patentanmeldung EP 3 018 095 A1 wird Verfahren zur Dampfreformierung von Kohlenwasserstoffen gelehrt, das einen Vorreformierungsschritt beinhaltet. Dabei wird im Austrittsstrom aus dem Prereformer mittels einer geeigneten Analysenmethode der Gehalt an C₂₊-Kohlenwasserstoffen gemessen. In Abhängigkeit von dem dabei erhaltenen Gehalt an C₂₊-Kohlenwasserstoffen wird ggf. der Dampfstrom zu dem Prereformer erhöht oder erniedrigt. Nachteilig ist es dabei jedoch, dass der Austrittsstrom aus dem Prereformer nachfolgend in einem Einsatzgas-Überhitzer auf die Dampfreformierungseintrittstemperatur des Hauptreformers gebracht wird. Durch die im Vergleich zu der Vorreformierung erheblich, in der Regel um mehrere 100 °C höhere Austrittstemperatur des Einsatzgases aus dem Einsatzgas-Überhitzer unmittelbar vor Eintritt in den Hauptreformer besteht ein weiteres Potential zur Bildung von C₂₊-Kohlenwasserstoffen durch Crackprozesse und nachfolgende Radikal-Rekombinationen, so dass das wahre Verkokungspotential des überhitzen Einsatzgases vor Eintritt in den Hauptreformer nur unzureichend bekannt ist. Ferner wird nicht hinsichtlich der Art und Reaktivität der einzelnen Komponenten differenziert, die den Summenparameter "C₂₊-Kohlenwasserstoffe" bilden.

Es besteht daher weiterhin Bedarf an Verfahren zur Dampfreformierung, bei denen eine gezielte Vermeidung oder Verminderung der Koksbildung in den Reformerrohren oder anderen Teilen der Reformeranlage angestrebt wird und die sich gleichzeitig durch einen geringen apparativen Aufwand auszeichnen.

### Beschreibung der Erfindung

Die Aufgabe der vorliegenden Erfindung besteht daher darin, ein solches Verfahren und eine entsprechende Anlage anzugeben, die die erwähnten Nachteile des Stands der Technik nicht aufweisen.

Diese Aufgabe wird in einem ersten Aspekt durch ein Verfahren mit den Merkmalen des Anspruchs 1 und mit einer Anlage mit den Merkmalen des Anspruchs 8 gelöst. Weitere Ausgestaltungen der Erfindung ergeben sich aus den Unteransprüchen der jeweiligen Kategorie.

Die Dampfreformierungsbedingungen sind dem Fachmann aus dem Stand der Technik, beispielsweise den eingangs erörterten Dokumenten, bekannt. Es sind diejenigen physikalisch-chemischen Bedingungen, unter denen ein messbarer, bevorzugt ein technisch relevanter Umsatz von Kohlenwasserstoffen zu Synthesegasprodukten erzielt wird. Hierzu zählen als wichtige Parameter das Einstellen einer geeigneten Dampfreformierungseintrittstemperatur von typischerweise rund 1000 °C und die Zugabe von Dampf zu dem Kohlenwasserstoffe enthaltenden Einsatzgas und somit das Einstellen eines Dampf/Kohlenstoff-Verhältnisses (S/C-Verhältnis). Typische Werte für das S/C-Verhältnis liegen zwischen 1,5 und 3,5 mol/mol. Notwendige Anpassungen dieser Bedingungen an die jeweiligen Betriebserfordernisse wird der Fachmann auf der Grundlage von Routineversuchen vornehmen. Dabei können ggf. offenbarte, spezifische Reaktionsbedingungen als Orientierung dienen, sie sind aber in Bezug auf den Umfang der Erfindung nicht einschränkend zu verstehen.

Die Angabe, dass ein Stoffstrom direkt einer spezifischen Verfahrensstufe oder einem spezifischen Anlagenteil zugeführt wird, ist so zu verstehen, dass der Stoffstrom in diese Verfahrensstufe oder diesen Anlagenteil eingeleitet wird, ohne dass zuvor ein Durchleiten durch andere Verfahrensstufen oder Anlagenteile erfolgte, mit Ausnahme reiner Transportvorgänge und der dazu benötigten Mittel, beispielsweise Rohrleitungen, Ventile, Pumpen, Verdichter, Vorratsbehälter.

Alle etwaigen Druckangaben erfolgen als Absolutdruckeinheiten, abgekürzt bara, oder als Überdruckeinheiten, abgekürzt barg, wenn im jeweiligen Einzelzusammenhang nichts anderes angegeben wird.

Unter Fluidverbindung zwischen zwei Bereichen der erfindungsgemäßen Vorrichtung wird dabei jegliche Art von Verbindung verstanden, die es ermöglicht, dass ein Fluid, beispielsweise ein Gasstrom, von dem einen zu dem anderen der beiden Bereiche strömen kann, unbeachtlich etwaiger zwischengeschalteter Bereiche oder Bauteile. Insbesondere wird unter einer direkten Fluidverbindung jegliche Art von Verbindung verstanden, die es ermöglicht, dass ein Fluid, beispielsweise ein Gasstrom, direkt von dem einen zu dem anderen der beiden Bereiche strömen kann, wobei keine weiteren Bereiche oder Bauteile zwischengeschaltet sind, mit Ausnahme reiner Transportvorgänge und der dazu benötigten Mittel, beispielsweise Rohrleitungen, Ventile, Pumpen, Verdichter, Vorratsbehälter. Ein Beispiel wäre eine Rohrleitung, die direkt dem einen zu dem anderen der beiden Bereiche führt.

Unter einem Mittel wird eine Sache verstanden, die die Erreichung eines Zieles ermöglicht oder dabei behilflich ist. Insbesondere werden unter Mitteln zum Durchführen eines bestimmten Verfahrensschrittes alle diejenigen physischen Gegenstände verstanden, die der Fachmann in Betracht ziehen würde, um diesen Verfahrensschritt durchführen zu können. Beispielsweise wird der Fachmann als Mittel zum Einleiten oder Ausleiten eines Stoffstroms alle Transport- und Fördervorrichtungen, also z. B. Rohrleitungen, Pumpen, Verdichter, Ventile, in Betracht ziehen, die ihm aufgrund seines Fachwissens zur Durchführung dieses Verfahrensschrittes notwendig oder sinnvoll erscheinen.

Für die Zwecke dieser Beschreibung ist Dampf synonym mit Wasserdampf zu verstehen, sofern es nicht im Einzelfall anders angegeben wird. Die Angabe "Wasser" bezieht sich dagegen auf Wasser im flüssigen Aggregatzustand, soweit nicht im Einzelfall anders angegeben.

Mit Wärmeaustauschbeziehung ist die Möglichkeit des Wärmeaustauschs oder der Wärmeübertragung zwischen zwei Bereichen, beispielsweise der erfindungsgemäßen Vorrichtungen gemeint, wobei alle Mechanismen des Wärmeaustauschs oder der Wärmeübertragung wie Wärmeleitung, Wärmestrahlung oder konvektiver Wärmetransport zum Tragen kommen können. Unter einer indirekten Wärmeaustauschbeziehung wird dabei insbesondere die Art des Wärmeaustauschs oder der Wärmeübertragung verstanden, die durch eine Wand hindurch erfolgt (sog. Wärmedurchgang), der die Etappen des Wärmeübergangs von Fluid 1 auf die Oberfläche der Wand, der Wärmeleitung durch die Wand und des Wärmeübergangs von der Oberfläche der Wand auf Fluid 2 umfasst.

Unter einem weiteren Reinigungs-, Konditionierungs- oder Verarbeitungsschritt des Rohsynthesegases werden alle Maßnahmen und Verfahrensschritte verstanden, die zur Herstellung eines Reinsynthesegases, reinem Wasserstoff und/oder reinem Kohlenmonoxid aus dem Stand der Technik bekannt sind. Dazu zählen die CO-Konvertierung zur Erhöhung des Wasserstoffanteils im Synthesegas, die Abtrennung von Kohlendioxid mittels eines geeigneten Waschverfahrens wie beispielweise des Rectisol-Verfahrens oder die Wäsche mit aminhaltigen Waschmitteln, die kryogene Gaszerlegung zum Erzeugen von reinem Kohlenmonoxid, die Druckwechseladsorption (PSA) zum Erzeugen von Reinwasserstoff sowie physikalische Verfahrensschritte wie beispielsweise Abkühlen, Kondensieren, Abtrennen des Kondensats.

Unter ungesättigten C₂₊-Kohlenwasserstoffen sind prinzipiell alle offenkettigen oder cyclischen Kohlenwasserstoffe mit zwei oder mehr Kohlenstoffatomen und mindestens einer Mehrfachbindung zu verstehen, beispielsweise Olefine (Alkene) wie Ethen (Ethylen), Propen (Propylen), Butene, Acetylene (Alkine) wie Ethin (Acetylen), Propin (Methylacetylen), Cycloalkene, aromatische Kohlenwasserstoffe wie Benzol, Toluol, Xylole usw. Als Leitkomponenten können dabei beispielsweise Ethen und Ethin dienen, da sie im Zusammenhang mit der vorliegenden Erfindung eine große Bedeutung aufweisen und mit hoher Wahrscheinlichkeit im überhitzten Einsatzgas beobachtet werden können.

Unter einem Analysenverfahren bzw. einer Analysenvorrichtung sind im Rahmen der Beschreibung der vorliegenden Erfindung prinzipiell alle Analysenverfahren und Analysenvorrichtungen zu verstehen, die zur Messung der Konzentration ungesättigter C₂₊-Kohlenwasserstoffe geeignet sind. Bevorzugt sind dabei instrumentelle Analysenverfahren, beispielsweise die Gaschromatographie-Massenspektrometrie-Kopplung (GC/MS) sowie Infrarotspektrometrie in dispersiver Form (Aufzeichnung und Auswertung von IR-Spektren, z. B. mittels Fourier-Transformations-Spektrometrie, FTIR) oder nichtdispersiver Form (kontinuierliche Messung der IR-Absorption bei fester Wellenlänge, NDIR). Besonders bevorzugt ist die Anwendung instrumentelle Online-Analysenverfahren, bei denen eine Probenahme- und Analysenvorrichtung in Fluidverbindung, bevorzugt direkter Fluidverbindung, mit dem zu beprobenden Stoffstrom, hier dem überhitzten Einsatzgas, steht. Auf diese Weise kann die Konzentration ungesättigter C₂₊-Kohlenwasserstoffe ohne großen Zeitverlust gemessen werden, insbesondere im Vergleich zu einem Analysenverfahren, das die manuelle Probenahme, den Transport der entnommenen Proben in ein Labor und die dortige Durchführung und Auswertung der Analyse erfordert. Besonders vorteilhaft ist die Anwendung instrumentelle Online-Analysenverfahren im Zusammenhang mit der wiederholten, kontinuierlichen oder periodischen Durchführung der Bestimmung der Konzentration ungesättigter C₂₊-Kohlenwasserstoffe im überhitzten Einsatzgas. Ferner erleichtert die Verwendung von Online-Analysenverfahren die Messung der Konzentration thermisch und/oder kinetisch instabiler Verbindungen, beispielsweise von Acetylenen, so dass reproduzierbare, genaue und richtige Analysenwerte erhalten werden können.

Unter einer Datenverarbeitungsvorrichtung wird ein Computer oder eine sonstige Mess-, Steuerungs- und Regelungsvorrichtung verstanden, die dazu geeignet ist, aus der gemessenen Konzentration ungesättigter C₂₊-Kohlenwasserstoffe im überhitzten Einsatzgas einen Stellwert für eine Dosierungsvorrichtung zu erzeugen. Dabei werden unter einer Dosierungsvorrichtung sämtliche Vorrichtungen verstanden, die es ermöglichen, eine vorgegebene Stoffmenge einer oder mehrerer Zielkomponenten an einen definierten Ort zu verbringen, bevorzugt während eines definierten Zeitraumes, weiter bevorzugt in wiederholter, kontinuierlicher oder periodischer Weise.

Der Erfindung liegt die Erkenntnis zugrunde, dass die Konzentration ungesättigter C₂₊-Kohlenwasserstoffe im überhitzten Einsatzgas unmittelbar und direkt vor seinem Eintritt in die Hauptreformierungsstufe einen besonders leistungsfähigen Parameter zur Vorhersage der Koksablagerung auf dem Reformierungskatalysator in den Reformerrohren bildet. Dies steht im Einklang mit allgemeinen wissenschaftlichen Erkenntnissen zum Mechanismus der Bildung von Koksablagerungen oder der Rußbildung. So wird in der Dissertation "Modellierung und Modellentwicklung der Rußbildung bei hohem Druck in vorgemischten Verbrennungssystemen", D. Hu, Institut für Verbrennungstechnik, Deutsches Zentrum für Luft- und Raumfahrt (DLR), Stuttgart (2001), offenbart, dass für die Entstehung und das Wachstum von Rußpartikeln die beiden folgenden Mechanismen bedeutend sind:
(a) Acetylen-Addition über einen Wasserstoff-Abstraktions-Acetylen-Additions-Mechanismus,
(b) Kondensation polycyclischer aromatischer Kohlenwasserstoffe (PAH) auf Partikeloberflächen.

Demnach ist in beiden Mechanismen die Anwesenheit ungesättigter C₂₊-Kohlenwasserstoffe entscheidend. Ferner spielen auch Olefine eine wichtige Rolle bei der Ruß- bzw. Koksbildung, da sie einerseits eine Vorstufe zu Acetylenen bilden, die aus ersteren durch weitere Dehydrierung entstehen, und andererseits, insbesondere im Falle mehrfach ungesättigter Olefine wie beispielsweise Diene, direkt einer Oligomerisation oder Polymerisation zugänglich sind, die ebenfalls zu kohlenstoffreichen Ablagerungen beispielsweise auf Katalysatoroberflächen führt. Auch eine Reaktion zwischen Dienen und Mono-Olefinen im Sinne einer Diels-Alder-Reaktion ist möglich, wobei zunächst Monoaromaten gebildet werden, die nachfolgend wiederum die Vorstufe zu PAH darstellen können.

Folglich hat die Messung der Konzentration ungesättigter C₂₊-Kohlenwasserstoffe im überhitzten Einsatzgas Vorteile gegenüber der Bestimmung der Konzentration der C₂₊-Kohlenwasserstoffe als Summenparameter, wie es in der EP 3 018 095 A1 gelehrt wird, da mittels ersterer das Verkokungspotential des überhitzten, also auf Reformierungsbedingungen gebrachten Einsatzgases empfindlicher prognostiziert werden kann als dieses durch die Bestimmung letzterer möglich ist.

### Bevorzugte Ausgestaltungen der Erfindung

Ein zweiter Aspekt des erfindungsgemäßen Verfahrens ist dadurch gekennzeichnet, dass kein Vorreformierungsschritt in einem Prereformer umfasst wird. Da durch die Messung der Konzentration ungesättigter C₂₊-Kohlenwasserstoffe im überhitzten Einsatzgas ein besonders aussagekräftiger Parameter zur Vorhersage der Koksablagerung auf dem Reformierungskatalysator in den Reformerrohren zur Verfügung steht, kann das Reformierungsverfahren so genau gesteuert werden, dass auf eine Vorspaltung beispielsweise nasser oder schwerer Erdgase, also Erdgase mit erhöhtem Anteil an C₂₊-Kohlenwasserstoffen, in einem Prereformer verzichtet werden kann. Die Konzentration ungesättigter C₂₊-Kohlenwasserstoffe scheint demnach als Parameter zur Vermeidung der Verkokung besser geeignet bzw. leistungsfähiger zu sein als lediglich die Messung der Konzentration der C₂₊-Kohlenwasserstoffe als Summenparameter, wie es in der EP 3 018 095 A1 gelehrt wird, da im dortigen Reformierungsverfahren ein Prereformer umfasst wird, auf den anscheinend nicht verzichtet werden kann. Der Verzicht auf eine Vorreformierungsstufe erbringt aber erhebliche Vorteile hinsichtlich der Investitions- und Betriebskosten sowie weitere logistische Vorteile, beispielsweise eine Einsparung von Aufstellungsplatz.

Ein dritter Aspekt des erfindungsgemäßen Verfahrens ist dadurch gekennzeichnet, dass die Ermittlung der Konzentration ungesättigter C₂₊-Kohlenwasserstoffe in dem auf die Dampfreformierungseintrittstemperatur erhitzten Einsatzgas wiederholt erfolgt. Dies ermöglicht eine Vorhersage des Verkokungspotentials des Einsatzgases unter Reformierungsbedingungen unmittelbar vor seinem Kontakt mit dem Reformierungskatalysator in den Reformerrohren. Daher können Zustandsänderungen des Einsatzgases, beispielsweise dessen Temperatur und das ihm eigene S/C-Verhältnis, in besonders empfindlicher und rascher Weise bewirkt werden. Dabei kann die Qualität bzw. Zusammensetzung des Einsatzgases zeitlichen Änderungen oder Schwankungen unterworfen sein; so ist beispielsweise die Verarbeitung nasser oder schwerer Erdgase mit erhöhtem Anteil von C₂₊-Kohlenwasserstoffe im Hinblick auf eine mögliche Verkokungsneigung problematischer als die Verarbeitung trockener bzw. leichter Erdgase. Auch dieser Gesichtspunkt wird durch die wiederholte Ermittlung der Konzentration ungesättigter C₂₊-Kohlenwasserstoffe berücksichtigt.

Ein vierter Aspekt des erfindungsgemäßen Verfahrens ist dadurch gekennzeichnet, dass die Ermittlung der Konzentration ungesättigter C₂₊-Kohlenwasserstoffe in dem auf die Dampfreformierungseintrittstemperatur erhitzten Einsatzgas kontinuierlich oder periodisch erfolgt. Die Qualität bzw. Zusammensetzung des Einsatzgases kann zeitlichen Änderungen oder Schwankungen unterworfen sein; so ist beispielsweise die Verarbeitung nasser oder schwerer Erdgase mit erhöhtem Anteil von C₂₊-Kohlenwasserstoffe im Hinblick auf eine mögliche Verkokungsneigung problematischer als die Verarbeitung trockener bzw. leichter Erdgase. Der vierte Aspekt des erfindungsgemäßen Verfahrens trägt diesem Umstand in besonderer Weise Rechnung, um auf diese Weise rasch auf eine Änderung der Qualität bzw. Zusammensetzung des Einsatzgases reagieren zu können.

Ein fünfter Aspekt des erfindungsgemäßen Verfahrens ist dadurch gekennzeichnet, dass mittels einer Datenverarbeitungsvorrichtung aus der kontinuierlich oder periodisch ermittelten Konzentration ungesättigter C₂₊-Kohlenwasserstoffe in dem auf die Dampfreformierungseintrittstemperatur erhitzten Einsatzgas kontinuierlich oder periodisch ein Istwert bestimmt und mit dem vordefinierten Höchstwert verglichen wird und dass mittels einer Dosierungsvorrichtung dem Einsatzgas stromaufwärts der einen Wärmetauscherstufe (bei einstufiger Ausgestaltung) oder zwischen zwei Wärmetauscherstufen des Einsatzgas-Überhitzers (bei mehrstufiger Ausgestaltung) Wasser oder Dampf zugegeben wird, deren Temperatur kleiner ist als die Dampfreformierungseintrittstemperatur, falls der Istwert über dem vordefinierten Höchstwert liegt. Der fünfte Aspekt des erfindungsgemäßen Verfahrens trägt diesem Umstand in besonderer Weise Rechnung, um auf diese Weise rasch auf eine Änderung der Qualität bzw. Zusammensetzung des Einsatzgases reagieren zu können. Dies erfolgt durch kontinuierlichen oder periodischen Vergleich des Istwerts der Konzentration ungesättigter C₂₊-Kohlenwasserstoffe mit dem festgelegten Sollwert und der Zugabe von Wasser oder Dampf in das Einsatzgas stromaufwärts der einen Wärmetauscherstufe oder zwischen zwei Wärmetauscherstufen des Einsatzgas-Überhitzers mittels der Dosierungsvorrichtung. Die beiden Wärmetauscherstufen können bei einem Einsatzgas-Überhitzer mit mehr als zwei Wärmetauscherstufen unmittelbar benachbart sein oder es können eine oder mehrere zusätzliche Wärmetauscherstufen zwischengeschaltet sein. Bevorzugt erfolgt die Zugabe von Wasser oder Dampf in das Einsatzgas stromaufwärts der letzten Wärmetauscherstufe vor dem Eintritt des Einsatzgases in die Hauptreformierungsstufe. Bei einstufiger Ausgestaltung des Einsatzgas-Überhitzers ist dies als Zugabe von Wasser oder Dampf in das Einsatzgas stromaufwärts der einzigen Wärmetauscherstufe zu verstehen.

Ein sechster Aspekt des erfindungsgemäßen Verfahrens ist dadurch gekennzeichnet, dass die Zugabe von Wasser oder Dampf, deren Temperatur kleiner ist als die Dampfreformierungseintrittstemperatur, kontinuierlich, mehrfach oder periodisch vorgenommen wird und solange fortgeführt wird, bis der Istwert unter dem vordefinierten Höchstwert liegt. Dies erfolgt durch kontinuierlichen oder periodischen Vergleich des Istwerts der Konzentration ungesättigter C₂₊-Kohlenwasserstoffe mit dem festgelegten Sollwert und der ebenfalls bevorzugt kontinuierlichen oder periodischen Zugabe von Wasser oder Dampf in das Einsatzgas zwischen zwei Wärmetauscherstufen des Einsatzgas-Überhitzers mittels der Dosierungsvorrichtung, wodurch eine besonders feine Annäherung an einen sich zeitlich verändernden Istwert der Konzentration ungesättigter C₂₊-Kohlenwasserstoffe ermöglicht wird. Die beiden Wärmetauscherstufen können bei einem Einsatzgas-Überhitzer mit mehr als zwei Wärmetauscherstufen unmittelbar benachbart sein oder es können eine oder mehrere zusätzliche Wärmetauscherstufen zwischengeschaltet sein. Bevorzugt erfolgt die Zugabe von Wasser oder Dampf in das Einsatzgas stromaufwärts der letzten Wärmetauscherstufe vor dem Eintritt des Einsatzgases in die Hauptreformierungsstufe.

Ein siebter Aspekt des erfindungsgemäßen Verfahrens ist dadurch gekennzeichnet, dass eine oder mehrere Wärmetauscherstufen des Einsatzgas-Überhitzers von dem Kohlenwasserstoffe enthaltenden Einsatzgas im Gleichstrom oder Gegenstrom relativ zum Rauchgasstrom durchlaufen werden, wobei mindestens eine Wärmetauscherstufe im Gleichstrom relativ zum Rauchgasstrom durchlaufen wird. Dabei ist es aus folgenden Gründen vorteilhaft, das Kohlenwasserstoffe enthaltenden Einsatzgas in mindestens zwei Wärmetauscherstufen zu überhitzen:
a) Für eine zu erreichende Überhitzungstemperatur kann die maximale Wandtemperatur der einzelnen Wärmetauscherstufen reduziert werden, wenn mindestens zwei statt einer einzigen Wärmetauscherstufen (sog. Coils) zur Überhitzung verwendet werden, da sich der zur Überhitzung benötigte Wärmeeintrag auf die beiden Wärmetauscherstufen verteilt. Dies ist günstig in Bezug auf die Minimierung der Verkokung in den einzelnen Coils und die niedrigere Auslegungstemperatur für das verwendete Material. Wenn beispielsweise die mit dem kalten Einsatzgas beaufschlagte, erste Wärmetauscherstufe im Rauchgasstrom direkt stromabwärts des Reformerofens, also zu Anfang der Rauchgasstrecke, angeordnet wird, erfolgt in ihr ein besonders intensiver Wärmeübergang bzw. Wärmetausch, insbesondere aufgrund von Wärmestrahlung, aufgrund der dort noch sehr hohen Rauchgastemperaturen.
   Dagegen ist die zweite, nachgeschaltete Wärmetauscherstufe an einer Stelle stromabwärts der ersten Wärmetauscherstufe angeordnet, an der das Rauchgas bereits etwas abgekühlt ist. Da hierdurch der Wärmeübergang aufgrund von Wärmestrahlung bereits geringer ist als in der ersten Wärmetauscherstufe, ist es günstig, die zweite Wärmetauscherstufe im Gegenstrom zur Fließrichtung des Rauchgases zu betreiben, um den Wärmeaustausch zu maximieren und die Baugröße der zweiten Wärmetauscherstufe verringern zu können. Alternativ kann die zweite Wärmetauscherstufe auch im Gleichstrom zur Fließrichtung des Rauchgases betrieben werden; hierdurch würde eine weitere Absenkung der Wandtemperaturen ermöglicht. Dies verringert die Wahrscheinlichkeit thermischer Schädigungen, beispielsweise Rissbildung an den Rohren, so dass für die zweite Wärmetauscherstufe ein Material mit geringerer thermischer Stabilität verwendet werden kann, das kostengünstiger verfügbar ist.
b) Die Verwendung mindestens zweier Wärmetauscherstufen ermöglicht ferner eine verbesserte Temperaturkontrolle durch Einspeisung kalter Medien zwischen die beiden Wärmetauscherstufen (sog. interstage cooling oder interstage quenching). Dies ist insbesondere dann günstig, wenn eine Temperaturlenkung stromaufwärts oder stromabwärts der Wärmetauscherstufen nicht oder nur schwierig möglich ist, beispielsweise weil bei der Zugabe von Quenchwasser stromaufwärts der ersten (bzw. einzigen) Wärmetauscherstufe der Taupunkt unterschritten würde, so dass es zur unerwünschten Kondensation kommt. In einem anderen Fall könnte es zu unerwünscht hohen Wandtemperaturen in der ersten (bzw. einzigen) Wärmetauscherstufe kommen, falls die Temperaturlenkung erst stromabwärts der Wärmetauscherstufe erfolgt.
c) Bei einer einstufigen Ausgestaltung des Einsatzgas-Überhitzers ist es bevorzugt, diesen im Gleichstrom relativ zum Rauchgasstrom zu betreiben, da hierdurch eine Absenkung der Wandtemperaturen ermöglicht wird. Dies verringert die Wahrscheinlichkeit thermischer Schädigungen, beispielsweise Rissbildung an der Rohren, so dass für diese Wärmetauscherstufe ein Material mit geringerer thermischer Stabilität verwendet werden kann, das kostengünstiger verfügbar ist.

In einem weiteren Aspekt ist die erfindungsgemäße Anlage dadurch gekennzeichnet, dass sie keinen Prereformer umfasst. Die Vorteile dieses Aspektes der erfindungsgemäßen Anlage entsprechen denjenigen, die im Zusammenhang mit dem zweiten Aspekt des erfindungsgemäßen Verfahrens erörtert wurden.

In einem weiteren Aspekt ist die erfindungsgemäße Anlage dadurch gekennzeichnet, dass die Analysenvorrichtung so ausgestaltet ist, dass die Bestimmung der Konzentration ungesättigter C₂₊-Kohlenwasserstoffe in dem auf die Dampfreformierungseintrittstemperatur erhitzten Einsatzgas wiederholt erfolgen kann. Die Vorteile dieses Aspektes der erfindungsgemäßen Anlage entsprechen denjenigen, die im Zusammenhang mit dem dritten Aspekt des erfindungsgemäßen Verfahrens erörtert wurden.

In einem weiteren Aspekt ist die erfindungsgemäße Anlage dadurch gekennzeichnet, dass die Analysenvorrichtung so ausgestaltet ist, dass die Bestimmung des Gehalts ungesättigter C₂₊-Kohlenwasserstoffe in dem auf die Dampfreformierungseintrittstemperatur erhitzten Einsatzgas kontinuierlich oder periodisch erfolgen kann. Die Vorteile dieses Aspektes der erfindungsgemäßen Anlage entsprechen denjenigen, die im Zusammenhang mit dem vierten Aspekt des erfindungsgemäßen Verfahrens erörtert wurden.

In einem weiteren Aspekt ist die erfindungsgemäße Anlage dadurch gekennzeichnet, dass die Datenverarbeitungsvorrichtung so ausgestaltet ist, dass es ermöglicht wird, dass aus der kontinuierlich oder periodisch bestimmten Konzentration ungesättigter C₂₊-Kohlenwasserstoffe in dem auf die Dampfreformierungseintrittstemperatur erhitzten Einsatzgas kontinuierlich oder periodisch ein Istwert bestimmt und mit dem vordefinierten Höchstwert verglichen wird und dass mittels der Dosierungsvorrichtung dem Einsatzgas stromaufwärts der einen Wärmetauscherstufe oder zwischen zwei Wärmetauscherstufen des Einsatzgas-Überhitzers Wasser oder Dampf zugegeben wird, deren Temperatur kleiner ist als die Dampfreformierungseintrittstemperatur, falls der Istwert über dem vordefinierten Höchstwert liegt. Die Vorteile dieses Aspektes der erfindungsgemäßen Anlage entsprechen denjenigen, die im Zusammenhang mit dem fünften Aspekt des erfindungsgemäßen Verfahrens erörtert wurden.

In einem weiteren Aspekt ist die erfindungsgemäße Anlage dadurch gekennzeichnet, dass die Zugabe von Wasser oder Dampf, deren Temperatur kleiner ist als die Dampfreformierungseintrittstemperatur, mittels der Dosierungsvorrichtung kontinuierlich, mehrfach oder periodisch vorgenommen wird und solange fortgeführt wird, bis der Istwert unter dem vordefinierten Höchstwert liegt. Die Vorteile dieses Aspektes der erfindungsgemäßen Anlage entsprechen denjenigen, die im Zusammenhang mit dem sechsten Aspekt des erfindungsgemäßen Verfahrens erörtert wurden.

In einem weiteren Aspekt ist die erfindungsgemäße Anlage dadurch gekennzeichnet, dass eine oder mehrere Wärmetauscherstufen des Einsatzgas-Überhitzers von dem Kohlenwasserstoffe enthaltenden Einsatzgas im Gleichstrom oder Gegenstrom relativ zum Rauchgasstrom durchlaufen werden können, wobei mindestens eine Wärmetauscherstufe im Gleichstrom relativ zum Rauchgasstrom durchlaufen wird. Die Vorteile dieses Aspektes der erfindungsgemäßen Anlage entsprechen denjenigen, die im Zusammenhang mit dem siebten Aspekt des erfindungsgemäßen Verfahrens erörtert wurden.

### Ausführungsbeispiel

Weiterbildungen, Vorteile und Anwendungsmöglichkeiten der Erfindung ergeben sich auch aus der nachfolgenden Beschreibung von Ausführungs- und Zahlenbeispielen und der Zeichnungen. Dabei bilden alle beschriebenen und/oder bildlich dargestellten Merkmale für sich oder in beliebiger Kombination die Erfindung, unabhängig von ihrer Zusammenfassung in den Ansprüchen oder deren Rückbeziehung.

Es zeigen:
- Fig. 1: ein Beispiel eines Verfahrens bzw. einer Anlage zum Herstellen von Synthesegas durch Dampfreformierung gemäß des Stands der Technik,
- Fig. 2: ein erstes Beispiel (Detail) eines Verfahrens bzw. einer Anlage zum Herstellen von Synthesegas durch Dampfreformierung gemäß der Erfindung,
- Fig. 3: ein zweites Beispiel (Detail) eines Verfahrens bzw. einer Anlage zum Herstellen von Synthesegas durch Dampfreformierung gemäß der Erfindung.

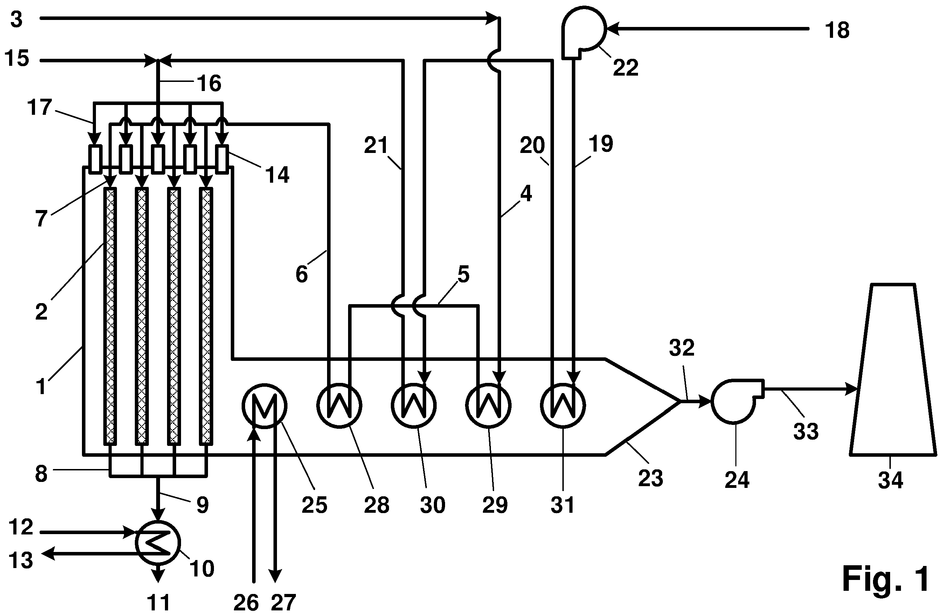

Fig. 1 zeigt ein Beispiel eines Verfahrens bzw. einer Anlage zum Herstellen von Synthesegas durch Dampfreformierung gemäß des Stands der Technik. Ein Reformerofen 1 einer Hauptreformierungsstufe enthält eine Vielzahl von mit Katalysator gefüllten Reformerrohren 2, wobei aus Übersichtlichkeitsgründen in Fig. 1 nur vier Reformerrohre dargestellt werden. Der in diesen verwendete Katalysator ist ein Nickel-basierter, kommerziell erhältlicher Reforming-Katalysator. Über Leitungen 3, 4, 5, 6 und 7 werden die Reformerrohre mit vorerhitztem, kohlenwasserstoffhaltigem Erdgas als Reformereinsatz beschickt. Die Eintrittstemperatur des Reformereinsatzes beträgt 500 °C. Vor Eintreten des Reformereinsatzes in den Reformer wird diesem Dampf beigemischt (nicht gezeigt in Fig. 1), so dass ein definiertes Dampf/Kohlenstoffverhältnis von beispielweise 3 mol/mol vorliegt. Nach Umsetzen des Einsatzes in den Reformerrohren wird das Wasserstoff, CO und nicht umgesetzte Erdgasbestandteile enthaltende, gasförmige Reformerprodukt über Leitungen 8 und Sammelleitung 9 abgezogen und in einem Wärmetauscher 10 abgekühlt, wobei ein abgekühltes Reformerprodukt erhalten und über Leitung 11 abgezogen und mindestens einem weiteren, nicht gezeigten Reinigungs-, Konditionierungs- oder Verarbeitungsschritt zugeführt wird. Die Abkühlung erfolgt im indirekten Wärmetausch gegen einen über Leitung 12 herangeführten Wasserstrom, aus dem durch Verdampfen in einem Wärmetauscher 10 ein Dampfstrom erhalten wird, der über Leitung 13 ausgeleitet wird.

Die Reformerrohre werden mittels einer Vielzahl von Brennern 14 befeuert, die an der Oberseite des Reformerofens angebracht sind und den Zwischenraum zwischen den Reformerrohren befeuern. Aus Übersichtlichkeitsgründen werden in der Figur nur fünf Brenner dargestellt. Im vorliegenden Beispiel werden die Brenner 14 mit Erdgas als Brennstoff betrieben, das über Leitungen 15, 16 und Verteilungsleitungen 17 den Brennern zugeführt wird. Die Verbrennungsluft wird über Leitungen 18, 19, 20 und 21 herangeführt, mittels Wärmetauschern 30, 31 vorgewärmt und dem Brennstoff in Leitung 16 zugemischt. Zur Förderung der Verbrennungsluft dient ein Gebläse 22.

Im Reformerofen 1 erfolgt der Wärmeübergang auf die Reformerrohre durch Wärmestrahlung und konvektive Wärmeübertragung der heißen Rauchgase. Nach erfolgter Wärmeübertragung treten die Rauchgase in einen Abhitzeteil 23 des Reformerofens 1 ein. Die Förderung der Rauchgase durch den Abhitzeteil des Reformerofens erfolgt im Saugzug eines Gebläses 24. Im Abhitzeteil des Reformerofens erfolgt die weitere Abkühlung der Rauchgase durch mehrere Wärmetauscher im Rauchgasweg, wobei die Enthalpie der Rauchgase zur Erzeugung eines oder mehrerer weiterer Dampfströme sowie zur mehrstufigen Vorwärmung des Reformereinsatzes und der Verbrennungsluft genutzt wird. Bezüglich der Dampferzeugung ist in der Figur exemplarisch ein Wärmetauscher 25 dargestellt, in dem die heißen Rauchgase im indirekten Wärmetausch gegen einen über Leitung 26 herangeführten Wasserstrom gekühlt werden, wobei ein Dampfstrom erzeugt wird, der über Leitung 27 abgezogen wird. Alternativ kann die Abkühlung der Rauchgase im Wärmetauscher 25 gegen einen Dampfstrom erfolgen, wobei dann über Leitung 27 überhitzter Dampf abgezogen wird.

Nach Passieren der zur Vorwärmung des Reformereinsatzes und der Verbrennungsluft dienenden Wärmetauscher 28 bis 31 verlassen die abgekühlten Rauchgase über Leitung 32 den Abhitzeteil des Reformerofens und werden mittels des Gebläses 24 über Leitung 33 einer Rauchgasentsorgung 34 zugeführt.

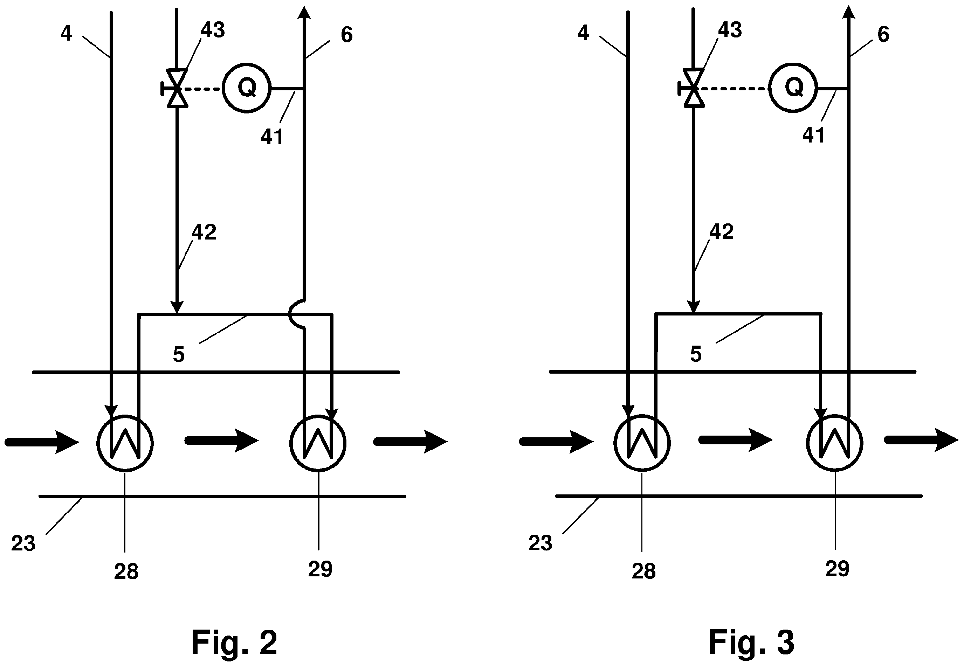

Fig. 2 zeigt ein erstes Beispiel eines Verfahrens bzw. einer Anlage zum Herstellen von Synthesegas durch Dampfreformierung gemäß der Erfindung als Detailansicht des Abhitzeteils 23. Die Bedeutung der Bezugszeichen entspricht derjenigen der analogen Bezugszeichen in Fig. 1. Kohlenwasserstoffhaltiges Einsatzgas wird mit einer Temperatur von rund 400 °C über Leitung 4 zu dem zweistufig ausgestalteten Einsatzgas-Überhitzer geleitet, der die beiden Wärmetauscherstufen 28 und 29 umfasst, und dort im indirekten Wärmeaustausch gegen den heißen Dampfreformierungsrauchgasstrom aufgeheizt. Die Temperatur des Dampfreformierungsrauchgasstroms beträgt stromaufwärts der in dessen Strömungsrichtung ersten Wärmetauscherstufe 28 rund 1050 °C, zwischen der ersten Wärmetauscherstufe 28 und der zweiten Wärmetauscherstufe 29 rund 950 °C und stromabwärts der zweiten Wärmetauscherstufe 29 rund 800 °C. Im Ausführungsbeispiel erfolgt die Durchströmung der ersten Wärmetauscherstufe 28 im Gleichstrom und der zweiten Wärmetauscherstufe 29 im Gegenstrom zu der Strömungsrichtung des Dampfreformierungsrauchgasstroms. Die Strömungsrichtung des Dampfreformierungsrauchgasstroms ist durch Pfeile angedeutet.

Gemäß der Erfindung wird mittels der computergesteuerten Analysenvorrichtung Q, die mit der Leitung 6 über eine Probenahmeleitung 41 verbunden ist, die Konzentration ungesättigter C₂₊-Kohlenwasserstoffe in dem auf die Dampfreformierungseintrittstemperatur erhitzten, über Leitung 6 zu der Hauptreformierungsstufe geführten Einsatzgas kontinuierlich oder periodisch gemessen, wobei ein Istwert bestimmt und mittels des Steuercomputers mit einem zuvor festgelegten Sollwert verglichen wird. Für eine periodische Durchführung der Messung der Konzentration ungesättigter C₂₊-Kohlenwasserstoffe ist die Gaschromatographie-Massenspektrometrie (GC/MS) gut geeignet, während für eine koninuierliche Konzentrationsbestimmung ein oder mehrere NDIR-Sensoren geeigneter sind, die hinsichtlich der untersuchten Wellenlängen für die jeweiligen Zielkomponenten spezifisch sind, also beispielsweise für Olefine, Acetylene und/oder aromatische Kohlenwasserstoffe.

Die Bestimmung geeigneter Sollwerte der Konzentration ungesättigter C₂₊-Kohlenwasserstoffe erfolgt zuvor durch Routineversuche. Diese können so durchgeführt werden, dass ein Modell-Reformerrohr, das mit dem zu verwendenden Reformierungskatalysator gefüllt ist, für unterschiedliche, technisch relevante Zeitdauern mit Testgasen mit variierender Konzentration an ungesättigten C₂₊-Kohlenwasserstoffen beaufschlagt wird, wobei die sonstigen Bedingungen, insbesondere die Eintrittstemperatur und der Eintrittsdruck in das Reformerrohr sowie die Raumgeschwindigkeit des Einsatzgases denen in der Technik üblichen Parametern möglichst nahekommen sollten. Anschließend wird durch eine geeignete Analysenmethode die Kohlenstoffbeladung des Katalysators und anderer ausgewählter Anlagenteile bestimmt, beispielsweise durch kontrolliertes Abbrennen des abgeschiedenen Kohlenstoffs und die Bestimmung des gebildeten Kohlendioxids. Hieraus lässt sich als Sollwert ableiten, welche Konzentration an ungesättigten C₂₊-Kohlenwasserstoffen für technisch relevante Betriebsbedingungen und Kontaktzeiten noch akzeptabel ist.

Überschreitet der Istwert den zuvor festgelegten Sollwert, so wird mittels des Steuercomputers über eine gestrichelt angedeutete Signalleitung ein im Leitungsweg der Leitung 42 angeordnetes Regelventil 43 geöffnet und mittels Leitung 42 Kaltdampf mit einer Temperatur von typischerweise 300 bis 450 °C, bevorzugt kleiner 360 °C zugegeben. Die Temperatur des Kaltdampfes entspricht dabei einer Überhitzung von typischerweise 10 bis 20 °C bezogen auf den jeweiligen Sättigungspunkt. Für die Kühlwirkung hat sich eine Kaltdampftemperatur von kleiner 360 °C als besonders günstig erwiesen; sie entspricht der typischen Vorwärmtemperatur des kohlenwasserstoffhaltigen Einsatzgases für die vorgeschaltete Hydrodesulfurierung.

Durch die Kaltdampfzugabe wird die Temperatur des Einsatzgases am Austritt aus der ersten Wärmetauscherstufe 28 auf beispielsweise 400 bis 550 °C, bevorzugt 420 bis 520 °C und am Austritt aus der zweiten Wärmetauscherstufe 29 auf beispielsweise 500 bis 700 °C, bevorzugt 520 bis 680 °C eingestellt. Temperaturen in der Nähe der unteren Grenztemperatur dieser Bereiche werden dabei beispielsweise für Erdgas mit einem hohen Anteil höherer Kohlenwasserstoffe als Einsatzgas (schweres Erdgas), Temperaturen in der Nähe der oberen Grenztemperatur dieser Bereiche werden dabei beispielsweise für Erdgas mit einem niedrigen Anteil höherer Kohlenwasserstoffe als Einsatzgas (leichtes Erdgas) bevorzugt. Bei einstufiger Ausgestaltung des Einsatzgas-Überhitzers wird die Temperatur des Einsatzgases an dessen Austritt auf beispielsweise 500 bis 700 °C, bevorzugt 520 bis 680 °C eingestellt.

Ferner wird durch die Kaltdampfzugabe oder durch eine Wasserzugabe das S/C-Verhältnis erhöht, wodurch ebenfalls die Konzentration an ungesättigten C₂₊-Kohlenwasserstoffen im Einsatzgas direkt nach dessen Ausleiten aus dem Einsatzgas-Überhitzer und direkt vor dessen Einleiten in die Hauptreformierungsstufe verringert wird und die Verkokungsneigung des Reformierungskatalysators vermindert wird.

Das in Fig. 3 gezeigte Ausführungsbeispiel der Erfindung entspricht weitgehend dem Ausführungsbeispiel der Fig. 2, wobei nunmehr die Durchströmung der ersten Wärmetauscherstufe 28 und der zweiten Wärmetauscherstufe 29 im Gleichstrom zu der Strömungsrichtung des Dampfreformierungsrauchgasstroms erfolgt. Dabei weist der Betrieb der zweiten Wärmetauscherstufe 29 im Gleichstrom die Vorteile auf, dass niedrigere Wandtemperaturen ermöglicht werden, was die Wahrscheinlichkeit thermischer Schädigungen, beispielsweise Rissbildung an der Rohren, verringert. Daher kann für die zweite Wärmetauscherstufe ein Material mit geringerer thermischer Stabilität verwendet werden, das kostengünstiger verfügbar ist. Andererseits weist ein Betrieb der zweiten Wärmetauscherstufe 29 im Gegenstrom die Vorteile auf, dass der Wärmetausch in der zweiten Wärmetauscherstufe intensiver erfolgt, da das wärmere Fluid beim Gegenstromwärmetauscher einen größeren Anteil seiner Wärmemenge auf das kältere Fluid überträgt als beim Gleichstromwärmetauscher, so dass die Wärmeaustauschfläche und die Baugröße des Apparats verringert werden können.

### Zahlenbeispiel

Eine Dampfreformierungsanlage wurde mit schwerem Erdgas als kohlenwasserstoffhaltigem Einsatz betrieben, das sich wie folgt zusammensetzte (Angabe jeweils in Vol.-%): Methan 90,49; Ethan 5,33; Propan 2,77; Butan 1,33; Pentan 0,03; Stickstoff 0,05.

Der Reformierungsdruck betrug 25 bara, das Dampf/Kohlenstoff-Verhältnis S/C betrug 2,8 mol/mol.

Vor die letzte Wärmetauscherstufe des Einsatzgas-Überhitzers in Strömungsrichtung des Rauchgases wurde Kaltdampf injiziert. Hierdurch stieg das S/C-Verhältnis von 2,8 auf 3,2 mol/mol und die Temperatur des Einsatzgases sank von 740 auf 680 °C.

Kinetische Berechnungen ergaben, dass infolge der Dampfinjektion die Reaktionsgeschwindigkeit der Kohlenstoffbildung aus Methan, Ethan und Propan auf rund 12%, 13% und 11% des Ursprungswertes absank. Die zeitliche Massensumme gebildeten Kohlenstoffs sank ebenfalls auf rund 12% des Ursprungswertes.

Mittels thermodynamischer Berechnungen wurden Aktivitäten für unterschiedliche Kohlenstoffbildungsreaktionen, Bildungsreaktionen ungesättigter Kohlenwasserstoffe aus gesättigten Kohlenwasserstoffen und die Vergasung von Kohlenstoff mit Dampf unter den Dampfreformierungsbedingungen berechnet. Die Aktivität wurde dabei gemäß der üblichen thermodynamischen Konvention definiert, so dass Aktivitätswerte größer als 1 das Ablaufen der betrachteten Reaktion gemäß der entsprechend formulierten Reaktionsgleichung von links nach rechts angeben, wohingegen Aktivitätswerte kleiner als 1 das Ablaufen der betrachteten Reaktion in der Gegenrichtung angeben und ein Aktivitätswert gleich 1 dem Gleichgewichtszustand entspricht.

Die ermittelten Aktivitätswerte sind in der nachfolgenden Tabelle zusammengestellt. Es ist deutlich erkennbar, dass infolge der Dampfinjektion die Aktivität der Kohlenstoffbildung aus Methan sowie aller Bildungsreaktionen ungesättigter Kohlenwasserstoffe aus gesättigten Kohlenwasserstoffen abnimmt. Auch die Aktivität der Vergasung von Kohlenstoff mit Dampf zu Kohlenmonoxid und Wasserstoff nimmt ab, gleichwohl ist die Reaktion immer noch thermodynamisch begünstigt.

Es ist somit klar ersichtlich, dass die Konzentration ungesättigter C₂₊-Kohlenwasserstoffe einen leistungsfähigen Leitparameter zur Beurteilung der Wirksamkeit einer Dampfinjektion vor eine Wärmetauscherstufe des Einsatzgas-Überhitzers im Hinblick auf die Vermeidung oder Reduzierung von Verkokungsreaktionen darstellt. Dies gilt sowohl für die thermodynamische Triebkraft unerwünschter Verkokungsreaktionen bzw. von Vorläuferreaktionen, als auch für die Reaktionsgeschwindigkeit dieser Reaktionen. Auf die mechanistische Bedeutung ungesättigter C₂₊-Kohlenwasserstoffe im Zusammenhang der Kohlenstoffbildung und der Verkokung von Oberflächen wurde oben bereits hingewiesen.

**Tabelle: Berechnete Aktivitäten für ausgewählte Reaktionen ohne und mit Dampfinjektion vor eine Wärmetauscherstufe des Einsatzgas-Überhitzers in einer Dampfreformierungsanlage**

| | **Ohne Dampfinjektion** | **Mit Dampfinjektion** |
|---|---|---|
| | | |
| **S/C mol/mol** | 2,80 | 3,20 |
| **T °C** | 740 | 680 |

| **Berechnete Aktivitäten** | | |
|---|---|---|
| ac{Methane to Carbon} | 88,2 | 49,4 |
| ac{Dehydroqenation of Ethane} | 0,0 | 0,0 |
| ac{Dehydroqenation of Propane} | 0,1 | 0,0 |
| ac{Dispropotionation of Butan to Propene} | 2,6 | 1,6 |
| ac{Disprop. of Butan to Ethene} | 1,5 | 0,8 |
| ac{Disprop. of Butan to two Ethene} | 0,2 | 0,0 |
| ac{Disprop. of Propan to Ethene to Methane} | 0,7 | 0,4 |
| ac{Dehydrierung of Pentane} | 0,0 | 0,0 |
| ac{Disprop. of Pentane to Buten and Methane} | 0,1 | 0,0 |
| ac{Disprop. of Pentane to Propen Ethene} | 0,0 | 0,0 |
| ac{Disprop. of Pentane to Butadien and Methane} | 0,0 | 0,0 |
| ac{Disprop. of Pentane to Propene and Ethane} | 0,3 | 0,2 |
| ac{Carbon Gasification with Steam} | 12,4 | 5,2 |

### Bezugszeichenliste

- [1]: Reformerofen
- [2]: Reformerrohr
- [3] - [9]: Leitung
- [10]: Wärmetauscher
- [11] - [13]: Leitung
- [14]: Brenner
- [15] - [21]: Leitung
- [22]: Gebläse
- [23]: Abhitzeteil
- [24]: Gebläse
- [25]: Wärmetauscher (Dampferzeugung)
- [26] - [27]: Leitung
- [28] - [29]: Wärmetauscher (zweistufiger Einsatzgas-Überhitzer)
- [30] - [31]: Wärmetauscher (Vorwärmung Verbrennungsluft)
- [32] - [33]: Leitung
- [34]: Rauchgasentsorgung
- [41] - [42]: Leitung
- [43]: Regelventil

- [Q]: Analysenvorrichtung

## Patentansprüche

1. Verfahren zum Herstellen eines Wasserstoff und Kohlenoxide enthaltenden Synthesegasprodukts aus einem Kohlenwasserstoffe enthaltenden Einsatzgas, vorzugsweise Erdgas oder Naphtha, umfassend folgende Schritte:
(a) Bereitstellen des Kohlenwasserstoffe enthaltenden Einsatzgas, vorzugsweise in entschwefelter Form,
(b) Einleiten des Einsatzgases in einen Einsatzgas-Überhitzer, wobei der Einsatzgas-Überhitzer als einstufiger oder mehrstufiger Wärmetauscher ausgestaltet ist, dessen sämtliche Wärmetauscherstufen in einer indirekten Wärmeaustauschbeziehung mit einem Dampfreformierungsrauchgas stehen, Erhitzen des Einsatzgases in dem Einsatzgas-Überhitzer auf eine Dampfreformierungseintrittstemperatur, Ausleiten des auf die Dampfreformierungseintrittstemperatur erhitzten Einsatzgases aus dem Einsatzgas-Überhitzer,
(c) direktes Einleiten des auf die Dampfreformierungseintrittstemperatur erhitzten Einsatzgases in eine Hauptreformierungsstufe, Umsetzen des Einsatzgases in der Hauptreformierungsstufe unter Dampfreformierungsbedingungen in einer Vielzahl von mit einem festen, partikelförmigen Reformierungskatalysator gefüllten Reformerrohren zu einem Wasserstoff, Kohlenoxide und nicht umgesetzte Kohlenwasserstoffe enthaltendem Rohsynthesegas, wobei die Reformerrohre in einem Reformerofen angeordnet sind, dessen Innenraum mittels einer Vielzahl von Brennern beheizt wird, wobei das Dampfreformierungsrauchgas gebildet wird, und wobei die Dampfreformierungsbedingungen die Zugabe von Dampf zu dem Kohlenwasserstoffe enthaltenden Einsatzgas und das Einstellen eines Dampf/Kohlenstoff-Verhältnisses umfassen,
(d) Ausleiten des Rohsynthesegases aus der Hauptreformierungsstufe und Zuführen des Rohsynthesegases zu mindestens einem weiteren Reinigungs-, Konditionierungs- oder Verarbeitungsschritt, wobei nach Durchlaufen des mindestens einen weiteren Reinigungs-, Konditionierungs- oder Verarbeitungsschrittes das Wasserstoff und Kohlenoxide enthaltende Synthesegasprodukt erhalten wird,
**dadurch gekennzeichnet, dass**
(e) mittels eines Analysenverfahrens die Konzentration ungesättigter C₂₊-Kohlenwasserstoffe in dem auf die Dampfreformierungseintrittstemperatur erhitzten Einsatzgas direkt nach dessen Ausleiten aus dem Einsatzgas-Überhitzer und direkt vor dessen Einleiten in die Hauptreformierungsstufe ermittelt wird,
(f) die ermittelte Konzentration ungesättigter C₂₊-Kohlenwasserstoffe mit einem vordefinierten Höchstwert verglichen wird,
(g) dem Einsatzgas stromaufwärts der einen Wärmetauscherstufe oder zwischen zwei Wärmetauscherstufen eines mehrstufigen Wärmetauschers des Einsatzgas-Überhitzers Wasser oder Dampf zugegeben wird, deren Temperatur kleiner ist als die Dampfreformierungseintrittstemperatur, falls die ermittelte Konzentration ungesättigter C₂₊-Kohlenwasserstoffe über dem vordefinierten Höchstwert liegt.

2. Verfahren nach Anspruch 1, **dadurch gekennzeichnet, dass** kein Vorreformierungsschritt in einem Prereformer umfasst wird.

3. Verfahren nach Anspruch 1 oder 2, **dadurch gekennzeichnet, dass** die Ermittlung der Konzentration ungesättigter C₂₊-Kohlenwasserstoffe in dem auf die Dampfreformierungseintrittstemperatur erhitzten Einsatzgas wiederholt erfolgt.

4. Verfahren nach Anspruch 3, **dadurch gekennzeichnet, dass** die Ermittlung der Konzentration ungesättigter C₂₊-Kohlenwasserstoffe in dem auf die Dampfreformierungseintrittstemperatur erhitzten Einsatzgas kontinuierlich oder periodisch erfolgt.

5. Verfahren nach Anspruch 4, **dadurch gekennzeichnet, dass** mittels einer Datenverarbeitungsvorrichtung aus der kontinuierlich oder periodisch ermittelten Konzentration ungesättigter C₂₊-Kohlenwasserstoffe in dem auf die Dampfreformierungseintrittstemperatur erhitzten Einsatzgas kontinuierlich oder periodisch ein Istwert bestimmt und mit dem vordefinierten Höchstwert verglichen wird und dass mittels einer Dosierungsvorrichtung dem Einsatzgas stromaufwärts der einen Wärmetauscherstufe oder zwischen zwei Wärmetauscherstufen des Einsatzgas-Überhitzers Wasser oder Dampf zugegeben wird, deren Temperatur kleiner ist als die Dampfreformierungseintrittstemperatur, falls der Istwert über dem vordefinierten Höchstwert liegt.

6. Verfahren nach Anspruch 5, **dadurch gekennzeichnet, dass** die Zugabe von Wasser oder Dampf, deren Temperatur kleiner ist als die Dampfreformierungseintrittstemperatur, kontinuierlich, mehrfach oder periodisch vorgenommen wird und solange fortgeführt wird, bis der Istwert unter dem vordefinierten Höchstwert liegt.

7. Verfahren nach einem der vorigen Ansprüche, **dadurch gekennzeichnet, dass** eine oder mehrere Wärmetauscherstufen des Einsatzgas-Überhitzers von dem Kohlenwasserstoffe enthaltenden Einsatzgas im Gleichstrom oder Gegenstrom relativ zum Rauchgasstrom durchlaufen werden, wobei mindestens eine Wärmetauscherstufe im Gleichstrom relativ zum Rauchgasstrom durchlaufen wird

8. Anlage zur Herstellung eines Wasserstoff und Kohlenoxide enthaltenden Synthesegasprodukts aus einem Kohlenwasserstoffe enthaltenden Einsatzgas, umfassend folgende, miteinander in Fluidverbindung stehende Anlagenteile:
(a) Mittel zum Bereitstellen des Kohlenwasserstoffe enthaltenden Einsatzgas, vorzugsweise in entschwefelter Form,
(b) einen Einsatzgas-Überhitzer, wobei der Einsatzgas-Überhitzer als einstufiger oder mehrstufiger Wärmetauscher ausgestaltet ist, dessen sämtliche Wärmetauscherstufen in einer indirekten Wärmeaustauschbeziehung mit einem Dampfreformierungsrauchgas stehen, Mittel zum Einleiten des Einsatzgases in den Einsatzgas-Überhitzer, Mittel zum Ausleiten eines auf eine Dampfreformierungseintrittstemperatur erhitzten Einsatzgases aus dem Einsatzgas-Überhitzer,
(c) eine Hauptreformierungsstufe, umfassend Reformerrohre, die mit einem festen, partikelförmigen Reformierungskatalysator gefüllt sind und die in einem Reformerofen angeordnet sind, dessen Innenraum mittels einer Vielzahl von Brennern beheizt wird, wobei das Dampfreformierungsrauchgas gebildet wird, Mittel zum direkten Einleiten des auf die Dampfreformierungseintrittstemperatur erhitzten Einsatzgases in die Hauptreformierungsstufe,
(d) Mittel zum Ausleiten des Rohsynthesegases aus der Hauptreformierungsstufe und Mittel zum Zuführen des Rohsynthesegases zu mindestens einer weiteren Reinigungs-, Konditionierungs- oder Verarbeitungsvorrichtung, geeignet zum Erzeugen eines Wasserstoff und Kohlenoxide enthaltende Synthesegasproduktes,
**dadurch gekennzeichnet, dass** ferner umfasst wird:
(e) eine Analysenvorrichtung, geeignet zum Durchführen eines Analysenverfahrens zum Bestimmen der Konzentration ungesättigter C₂₊-Kohlenwasserstoffe in dem auf die Dampfreformierungseintrittstemperatur erhitzten Einsatzgas direkt nach dessen Ausleiten aus dem Einsatzgas-Überhitzer und direkt vor dessen Einleiten in die Hauptreformierungsstufe,
(f) eine Datenverarbeitungsvorrichtung, geeignet zum Vergleichen der ermittelten Konzentration ungesättigter C₂₊-Kohlenwasserstoffe mit einem vordefinierten Höchstwert, und geeignet zum Steuern einer Dosierungsvorrichtung,
(g) eine Dosierungsvorrichtung, geeignet zum Zugeben von Wasser oder Dampf, deren Temperatur kleiner ist als die Dampfreformierungseintrittstemperatur, zu dem Einsatzgas, wobei die Dosierungsvorrichtung so ausgestaltet ist, dass das Zugeben des Wassers oder Dampfs stromaufwärts der einen Wärmetauscherstufe oder zwischen zwei Wärmetauscherstufen des Einsatzgas-Überhitzers erfolgen kann.

9. Anlage nach Anspruch 8, **dadurch gekennzeichnet, dass** sie keinen Prereformer umfasst.

10. Anlage nach Anspruch 8 oder 9, **dadurch gekennzeichnet, dass** die Analysenvorrichtung so ausgestaltet ist, dass die Bestimmung der Konzentration ungesättigter C₂₊-Kohlenwasserstoffe in dem auf die Dampfreformierungseintrittstemperatur erhitzten Einsatzgas wiederholt erfolgen kann.

11. Anlage nach einem der Ansprüche 8-10, **dadurch gekennzeichnet, dass** die Analysenvorrichtung so ausgestaltet ist, dass die Bestimmung des Gehalts ungesättigter C₂₊-Kohlenwasserstoffe in dem auf die Dampfreformierungseintrittstemperatur erhitzten Einsatzgas kontinuierlich oder periodisch erfolgen kann.

12. Anlage nach einem der Ansprüche 8-11, **dadurch gekennzeichnet, dass** die Datenverarbeitungsvorrichtung so ausgestaltet ist, dass es ermöglicht wird, dass aus der kontinuierlich oder periodisch bestimmten Konzentration ungesättigter C₂₊-Kohlenwasserstoffe in dem auf die Dampfreformierungseintrittstemperatur erhitzten Einsatzgas kontinuierlich oder periodisch ein Istwert bestimmt und mit dem vordefinierten Höchstwert verglichen wird und dass mittels der Dosierungsvorrichtung dem Einsatzgas stromaufwärts der einen Wärmetauscherstufe oder zwischen zwei Wärmetauscherstufen des Einsatzgas-Überhitzers Wasser oder Dampf zugegeben wird, deren Temperatur kleiner ist als die Dampfreformierungseintrittstemperatur, falls der Istwert über dem vordefinierten Höchstwert liegt.

13. Anlage nach Anspruch 12, so ausgestaltet, dass die Zugabe von Wasser oder Dampf, deren Temperatur kleiner ist als die Dampfreformierungseintrittstemperatur, mittels der Dosierungsvorrichtung kontinuierlich, mehrfach oder periodisch vorgenommen wird und solange fortgeführt wird, bis der Istwert unter dem vordefinierten Höchstwert liegt.

14. Anlage nach einem der Ansprüche 8-13, so ausgestaltet, dass eine oder mehrere Wärmetauscherstufen des Einsatzgas-Überhitzers von dem Kohlenwasserstoffe enthaltenden Einsatzgas im Gleichstrom oder Gegenstrom relativ zum Rauchgasstrom durchlaufen werden können, wobei mindestens eine Wärmetauscherstufe im Gleichstrom relativ zum Rauchgasstrom durchlaufen wird.

## Claims

1. Process for producing a synthesis gas product containing hydrogen and carbon oxides from an input gas containing hydrocarbons, preferably natural gas or naphtha, comprising the steps of:
(a) providing the input gas containing hydrocarbons, preferably in desulfurized form,
(b) introducing the input gas into an input gas superheater, wherein the input gas superheater is configured as a single-stage or multi-stage heat exchanger whose heat exchanger stages are all in an indirect heat exchange relationship with a steam reforming flue gas, heating the input gas in the input gas superheater to a steam reforming entry temperature, discharging the input gas heated to the steam reforming entry temperature from the input gas superheater,
(c) directly introducing the input gas heated to the steam reforming entry temperature into a main reforming stage, converting the input gas in the main reforming stage under steam reforming conditions in a multiplicity of reformer tubes filled with a solid, particulate reforming catalyst to afford a raw synthesis gas containing hydrogen, carbon oxides and unconverted hydrocarbons, wherein the reformer tubes are arranged in a reformer furnace whose interior is heated using a multiplicity of burners to form the steam reforming flue gas and wherein the steam reforming conditions comprise addition of steam to the input gas containing hydrocarbons and adjustment of a steam/carbon ratio,
(d) discharging the raw synthesis gas from the main reforming stage and supplying the raw synthesis gas to at least one further purifying, conditioning or processing step, wherein performance of the at least one further purifying, conditioning or processing step affords the synthesis gas product containing hydrogen and carbon oxides,
**characterized in that**
(e) an analytical method is used to determine the concentration of unsaturated C₂₊-hydrocarbons in the input gas heated to the steam reforming entry temperature directly after discharging thereof from the input gas superheater and directly before introduction thereof into the main reforming stage,
(f) the determined concentration of unsaturated C₂₊-hydrocarbons is compared with a predefined maximum value,
(g) water or steam having a temperature lower than the steam reforming entry temperature is added to the input gas upstream of the one heat exchanger stage or between two heat exchanger stages of a multi-stage heat exchanger of the input gas superheater in the case the determined concentration of unsaturated C₂₊-hydrocarbons is above the predefined maximum value.

2. Process according to Claim 1, **characterized in that** it does not comprise a prereforming step in a prereformer.

3. Process according to Claim 1 or 2, **characterized in that** the determination of the concentration of unsaturated C₂₊-hydrocarbons in the input gas heated to the steam reforming entry temperature is carried out repeatedly.

4. Process according to Claim 3, **characterized in that** the determination of the concentration of unsaturated C₂₊-hydrocarbons in the input gas heated to the steam reforming entry temperature is carried out continuously or periodically.

5. Process according to Claim 4, **characterized in that** a data processing apparatus uses the continuously or periodically determined concentration of unsaturated C₂₊-hydrocarbons in the input gas heated to the steam reforming entry temperature to continuously or periodically determine an actual value and compare said value with the predefined maximum value and **in that** a metering apparatus is used to add water or steam having a temperature lower than the steam reforming entry temperature to the input gas upstream of the one heat exchanger stage or between two heat exchanger stages of the input gas superheater in the case the actual value is above the predefined maximum value.

6. Process according to Claim 5, **characterized in that** the addition of water or steam having a temperature lower than the steam reforming entry temperature is carried out continuously, repeatedly or periodically and is continued until the actual value is below the predefined maximum value.

7. Process according to any of the preceding claims, **characterized in that** one or more heat exchanger stages of the input gas superheater are traversed by the input gas containing hydrocarbons in cocurrent or countercurrent relative to the flue gas stream, wherein at least one heat exchanger stage is traversed in cocurrent relative to the flue gas stream.

8. Plant for producing a synthesis gas product containing hydrogen and carbon oxides from an input gas containing hydrocarbons, comprising the following plant parts in fluid connection with one another:
(a) means for providing the input gas containing hydrocarbons, preferably in desulfurized form,
(b) an input gas superheater, wherein the input gas superheater is configured as a single-stage or multi-stage heat exchanger whose heat exchanger stages are all in an indirect heat exchange relationship with a steam reforming flue gas, means for introducing the input gas into the input gas superheater, means for discharging an input gas heated to a steam reforming entry temperature from the input gas superheater,
(c) a main reforming stage comprising reformer tubes filled with a solid, particulate reforming catalyst and arranged in a reformer furnace whose interior is heated using a multiplicity of burners to form the steam reforming flue gas, means for direct introduction of the input gas heated to the steam reforming entry temperature into the main reforming stage,
(d) means for discharging the raw synthesis gas from the main reforming stage and means for supplying the raw synthesis gas to at least one further purifying, conditioning or processing apparatus suitable for producing a synthesis gas product containing hydrogen and carbon oxides,
**characterized in that** it further comprises:
(e) an analytical apparatus suitable for performing an analytical method for determining the concentration of unsaturated C₂₊-hydrocarbons in the input gas heated to the steam reforming entry temperature directly after discharging thereof from the input gas superheater and directly before introduction thereof into the main reforming stage,
(f) a data processing apparatus suitable for comparing the determined concentration of unsaturated C₂₊-hydrocarbons having a predefined maximum value and suitable for controlling a metering apparatus,
(g) a metering apparatus suitable for adding water or steam having a temperature lower than the steam reforming entry temperature to the input gas, wherein the metering apparatus is configured such that the addition of the water or steam may be carried out upstream of the one heat exchanger stage or between two heat exchanger stages of the input gas superheater.

9. Plant according to Claim 8, **characterized in that** it does not comprise a prereformer.

10. Plant according to Claim 8 or 9, **characterized in that** the analytical apparatus is configured such that the determination of the concentration of unsaturated C₂₊-hydrocarbons in the input gas heated to the steam reforming entry temperature may be carried out repeatedly.

11. Plant according to any of Claims 8-10, **characterized in that** the analytical apparatus is configured such that the determination of the content of unsaturated C₂₊-hydrocarbons in the input gas heated to the steam reforming entry temperature may be carried out continuously or periodically.

12. Plant according to any of Claims 8-11, **characterized in that** the data processing apparatus is configured so as to make it possible to use the continuously or periodically determined concentration of unsaturated C₂₊-hydrocarbons in the input gas heated to the steam reforming entry temperature to continuously or periodically determine an actual value and compare said value with the predefined maximum value and to use the metering apparatus to add water or steam having a temperature lower than the steam reforming entry temperature to the input gas upstream of the one heat exchanger stage or between two heat exchanger stages of the input gas superheater in the case the actual value is above the predefined maximum value.

13. Plant according to Claim 12 configured such that the addition of water or steam having a temperature lower than the steam reforming entry temperature is carried out continuously, repeatedly or periodically using the metering apparatus and is continued until the actual value is below the predefined maximum value.

14. Plant according to any of Claims 8-13 configured such that one or more heat exchanger stages of the input gas superheater may be traversed by the input gas containing hydrocarbons in cocurrent or countercurrent relative to the flue gas stream, wherein at least one heat exchanger stage is traversed in cocurrent relative to the flue gas stream.

## Revendications

1. Procédé de fabrication d'un produit gaz de synthèse contenant de l'hydrogène et des oxydes de carbone à partir d'un gaz de charge contenant des hydrocarbures, de préférence le gaz naturel ou le naphta, comprenant les étapes suivantes :
(a) fourniture du gaz de charge contenant des hydrocarbures, de préférence sous forme désulfurée,
(b) introduction du gaz de charge dans un surchauffeur de gaz de charge, le surchauffeur de gaz de charge étant conçu comme un échangeur de chaleur à un ou plusieurs étages, dont la totalité des étages d'échange de chaleur sont en relation d'échange de chaleur indirect avec un effluent gazeux de vaporeformage, chauffage du gaz de charge dans le surchauffeur de gaz de charge à une température d'entrée dans le vaporeformeur, évacuation, à partir du surchauffeur de gaz de charge, du gaz de charge chauffé à la température d'entrée dans le vaporeformeur,
(c) introduction directe du gaz de charge chauffé à la température d'entrée dans le vaporeformeur dans un étage de reformage principal, réaction du gaz de charge dans l'étage de reformage principal dans des conditions de vaporeformage dans un grand nombre de tubes de reformeur remplis d'un catalyseur de reformage particulaire solide pour donner un gaz de synthèse brut contenant de l'hydrogène, des oxydes de carbone et des hydrocarbures n'ayant pas réagi, les tubes de reformeur étant disposés dans un four de reformeur, dont l'espace intérieur est chauffé à l'aide d'un grand nombre de brûleurs, avec formation de l'effluent gazeux du vaporeformage, et les conditions de vaporeformage englobant l'ajout de vapeur au gaz de synthèse contenant des hydrocarbures et l'ajustement d'un rapport vapeur/carbone,
(d) évacuation du gaz de synthèse brut de l'étage de reformage principal et envoi du gaz de synthèse brut à au moins une étape supplémentaire de purification, de conditionnement ou de traitement, le produit gaz de synthèse contenant de l'hydrogène et des oxydes de carbone étant obtenu après passage de l'au moins une étape supplémentaire de purification, de conditionnement ou de traitement,
**caractérisé en ce que**
(e) à l'aide d'une technique d'analyse, on détermine la concentration des hydrocarbures en C₂₊ insaturés dans le gaz de charge chauffé à la température d'entrée dans le vaporeformeur, immédiatement après son évacuation à partir du surchauffeur de gaz de charge et immédiatement avant son introduction dans l'étage de reformage principal,
(f) on compare la concentration déterminée des hydrocarbures en C₂₊ insaturés à une valeur maximale prédéfinie,
(g) on ajoute au gaz de charge en amont d'un étage d'échange de chaleur ou entre deux étages d'échange de chaleur d'un échangeur de chaleur à plusieurs étages du surchauffeur de gaz de charge, de l'eau et de la vapeur, dont la température est inférieure à la température d'entrée dans le vaporeformeur, dans le cas dans lequel la concentration déterminée des hydrocarbures en C₂₊ insaturés est supérieure à la valeur maximale prédéfinie.

2. Procédé selon la revendication 1, **caractérisé en ce qu'**aucune étape de préreformage n'est englobée dans un préreformeur.

3. Procédé selon la revendication 1 ou 2, **caractérisé en ce que** la détermination de la concentration des hydrocarbures en C₂₊ insaturés a lieu d'une manière répétée dans le gaz de charge chauffé à la température d'entrée dans le vaporeformeur.

4. Procédé selon la revendication 3, **caractérisé en ce que** la détermination de la concentration des hydrocarbures en C₂₊ insaturés a lieu d'une manière continue ou périodique dans le gaz de charge chauffé à la température d'entrée dans le vaporeformeur.

5. Procédé selon la revendication 4, **caractérisé en ce que**, à l'aide d'un dispositif de traitement de données, on détermine d'une manière continue ou périodique une valeur réelle à partir de la concentration déterminée d'une manière continue ou périodique des hydrocarbures en C₂₊ insaturés dans le gaz de charge chauffé à la température d'entrée dans le vaporeformeur, et on la compare à la valeur maximale prédéfinie, et **en ce que**, à l'aide d'un dispositif de dosage, on ajoute au gaz de charge en amont de l'étage d'échange de chaleur ou entre deux étages de chaleur du surchauffeur de gaz de charge de l'eau ou de la vapeur dont la température est inférieure à la température d'entrée dans le vaporeformeur, dans le cas dans lequel la valeur réelle est supérieure à la valeur maximale prédéfinie.

6. Procédé selon la revendication 5, **caractérisé en ce que** l'ajout d'eau ou de vapeur dont la température est inférieure à la température d'entrée dans le vaporeformeur est réalisé en continu, à plusieurs reprises ou d'une manière périodique, et est poursuivi jusqu'à ce que la valeur réelle soit inférieure à la valeur maximale prédéfinie.

7. Procédé selon l'une des revendications précédentes, **caractérisé en ce qu'**un ou plusieurs étages d'échange de chaleur du surchauffeur de gaz de charge sont traversés par le gaz de charge contenant des hydrocarbures, à co-courant ou à contre-courant par rapport au courant d'effluent gazeux, au moins un étage d'échange de chaleur étant traversé à co-courant par rapport au courant d'effluent gazeux.

8. Installation destinée à la fabrication d'un produit gaz de synthèse contenant de l'hydrogène et des oxydes de carbone à partir d'un gaz de charge contenant des hydrocarbures, comprenant les parties d'installation suivantes, en liaison fluidique les unes avec les autres :
(a) un moyen pour fournir le gaz de charge contenant des hydrocarbures, de préférence sous forme désulfurée,
(b) un surchauffeur de gaz de charge, le surchauffeur de gaz de charge étant conçu comme un échangeur de chaleur à un ou plusieurs étages, dont tous les étages d'échange de chaleur sont en relation d'échange de chaleur indirect avec un effluent gazeux de vaporeformage, un moyen pour introduire le gaz de charge dans le surchauffeur de gaz de charge, un moyen pour évacuer du surchauffeur de gaz de charge un gaz de charge chauffé à la température d'entrée dans le vaporeformeur,
(c) un étage de reformage principal, comprenant des tubes de reformeur, qui sont remplis d'un catalyseur de reformage solide particulaire et qui sont disposés dans un four de reformeur dont l'espace intérieur est chauffé par un grand nombre de brûleurs, avec formation de l'effluent gazeux de vaporeformage, un moyen pour l'introduction directe du gaz de charge chauffé à la température d'entrée dans le vaporeformeur dans l'étage de reformage principal,
(d) un moyen pour évacuer le gaz de synthèse brut de l'étage de reformage principal et un moyen pour envoyer le gaz de charge brut à au moins un dispositif supplémentaire de purification, de conditionnement ou de traitement, convenant à la production du gaz de synthèse contenant de l'hydrogène et des hydrocarbures, **caractérisée en ce qu'**elle comprend en outre :
(e) un dispositif d'analyse, convenant à la mise en œuvre d'une opération d'analyse pour déterminer la concentration des hydrocarbures en C₂₊ insaturés dans le gaz de charge chauffé à la température d'entrée dans le vaporeformeur, immédiatement après son évacuation du surchauffeur de gaz de charge et immédiatement avant son introduction dans l'étage de reformage principal,
(f) un dispositif de traitement de données, convenant à la comparaison de la concentration des hydrocarbures en C₂₊ insaturés avec une valeur maximale prédéfinie, et convenant au pilotage d'un dispositif de dosage,
(g) un dispositif de dosage, convenant à l'ajout, au gaz de charge, d'eau ou de vapeur, dont la température est inférieure à la température d'entrée dans le vaporeformeur, au gaz de charge, le dispositif de dosage étant conçu de telle sorte que l'ajout de l'eau ou de la vapeur puisse s'effectuer en amont de l'étage d'échange de chaleur ou entre deux étages d'échange de chaleur du surchauffeur de gaz de charge.

9. Installation selon la revendication 8, **caractérisée en ce qu'**elle ne comprend aucun préreformeur.

10. Installation selon la revendication 8 ou 9, **caractérisée en ce que** le dispositif d'analyse est conçu de telle sorte que la détermination de la concentration des hydrocarbures en C₂₊ insaturés puisse avoir lieu d'une manière répétée dans le gaz de charge chauffé à la température d'entrée dans le vaporeformeur.

11. Installation selon l'une des revendications 8 à 10, **caractérisée en ce que** le dispositif d'analyse est conçu de telle sorte que la détermination de la teneur du gaz de charge chauffé à la température d'entrée dans le vaporeformeur en hydrocarbures en C₂₊ insaturés puisse avoir lieu d'une manière continue ou périodique.

12. Installation selon l'une des revendications 8 à 11, **caractérisée en ce que** le dispositif de traitement de données est conçu de façon à permettre la détermination, d'une manière continue ou périodique, d'une valeur réelle à partir de la concentration, déterminée d'une manière continue ou périodique, des hydrocarbures en C₂₊ insaturés dans le gaz de charge chauffé à la température d'entrée dans le vaporeformeur, et sa comparaison avec la valeur maximale prédéfinie, et **en ce que**, à l'aide du dispositif de dosage, on ajoute au gaz de charge, en amont de l'étage d'échange de chaleur ou entre deux étages d'échange de chaleur du surchauffeur de gaz de charge, de l'eau ou de la vapeur dont la température soit inférieure à la température d'entrée dans le vaporeformeur, dans le cas dans lequel la valeur réelle est supérieure à la valeur maximale prédéfinie.

13. Installation selon la revendication 12, **caractérisée en ce que** l'ajout d'eau ou de vapeur dont la température est inférieure à la température d'entrée dans le vaporeformeur est réalisé en continu, à plusieurs reprises ou d'une manière périodique à l'aide du dispositif de dosage et est poursuivi jusqu'à ce que la valeur réelle soit inférieure à la valeur maximale prédéfinie.

14. Installation selon l'une des revendications 8 à 13, conçue de façon à permettre qu'un ou plusieurs étages d'échange de chaleur du surchauffeur de gaz de charge puissent être traversés par le gaz de charge contenant des hydrocarbures à co-courant ou à contre-courant par rapport au courant d'effluent gazeux, au moins un étage d'échange de chaleur étant traversé à co-courant par rapport à l'effluent gazeux.
